**Europäisches Patentamt**

**European Patent Office**

**Office européen des brevets**

(11) Publication number: **0 147 006**
**B1**

# EUROPEAN PATENT SPECIFICATION

(45) Date of publication of patent specification: **11.07.90**

(21) Application number: **84305526.0**

(22) Date of filing: **14.08.84**

(51) Int. Cl.⁵: **G 11 B 7/00, G 11 B 7/08, G 11 B 7/12**

(54) Switching laser beam apparatus for optical recording.

(30) Priority: **03.01.84 US 567610**

(43) Date of publication of application:
**03.07.85 Bulletin 85/27**

(45) Publication of the grant of the patent:
**11.07.90 Bulletin 90/28**

(84) Designated Contracting States:
**DE FR GB NL**

(56) References cited:
EP-A-0 089 736
FR-A-2 514 540
US-A-3 962 688
US-A-3 983 317
US-A-4 000 493
US-A-4 180 822

OPTICAL ENGINEERING, vol. 21, no. 5,
September/October 1982, pages 913-922,
Society of Photo-Optical Instrumentation
Engineers, Bellingham, Washington, US; R.
McFARLANE et al.: "Digital optical recorders at 5
Mbit/s data rate"

(73) Proprietor: **CONTROL DATA CORPORATION**
**8100-34th Avenue South**
**Minneapolis Minnesota 55440 (US)**

(72) Inventor: **Chen, Di**
**302 Sunbird Cliffs West**
**Colorado Springs Colorado 80907 (US)**

(74) Representative: **Caro, William Egerton et al**
**J. MILLER & CO. Lincoln House 296-302 High**
**Holborn**
**London WC1V 7JH (GB)**

(56) References cited:
**PROCEEDINGS OF SPIE - THE INTERNATIONAL**
**SOCIETY FOR OPTICAL ENGINEERING,**
**Arlington, Virginia, 8th-9th June 1983, vol. 421,**
**"Optical Disks Systems and Applications", pages**
**156-162, SPIE, Bellingham, Washington, US;**
**C.W. RENO: "Optical disk recording techniques**
**for data rates beyond 100 Mbps"**

**PATENT ABSTRACTS OF JAPAN, vol. 7, no. 198**
**(P-220)1343r, 2nd September 1983; & JP-A-58 97**
**141**

Courier Press, Leamington Spa, England.

EP 0 147 006 B1

**Description**

This invention relates to switching laser beam apparatus for optical recording.

According to the present invention there is provided a switching laser beam apparatus for optical recording comprising: a laser for projecting a laser beam in a first path; splitter means for generating a read-before-write beam, a read beam and a read-after-write beam from the laser beam; and an acoustic optical modulator between the laser and the splitter means in the path of the laser beam, characterised by generating means for generating a signal for causing the acoustic optical modulator to produce a write beam by diffracting a predetermined percentage of the laser beam into a second path; and diverting means for diverting the write beam into the first path after the splitter means.

Preferably the apparatus includes detector means for detecting the write beam after reflection from an optical recording surface, the generating means including adjust means for altering the frequency of said signal in response to the detector means.

The detector means may be a split field detector or a quad field detector. The quad field detector may include means for detecting the path of the reflected write beam in two dimensions to permit control in the two dimensions.

In one embodiment attenuator means are disposed between the acoustic optical modulator and the splitter means in the first path.

The generating means preferably includes switch means responsive to a write signal for selectively passing said signal to the acoustic optical modulator for selectively producing the write beam.

In another embodiment the apparatus includes a beam stop mounted at a position out of the second path, the generating means including means for generating a further signal having a frequency different from that of the first-mentioned signal for causing the write beam to be diffracted to said beam stop, and means responsive to a write signal for selectively applying the first-mentioned and further signals to the acoustic optical modulator.

The invention is illustrated, merely by way of example, in the accompanying drawings, in which:—

Figure 1 is a schematic view of a known switching laser beam apparatus for optical recording;

Figure 2 shows a read-before-write beam, a read-after-write beam and a read or write beam focused on a track on an optical recording surface by the known switching laser beam apparatus of Figure 1;

Figure 3 shows schematically a first embodiment of a switching laser beam apparatus according to the present invention for optical recording;

Figure 4 is a block diagram of a drive circuit of the switching laser beam apparatus of Figure 3;

Figure 5 shows schematically a second embodiment of a switching laser beam apparatus according to the present invention for optical recording; and

Figure 6 is a block diagram of a drive circuit of the switching laser beam apparatus of Figure 5.

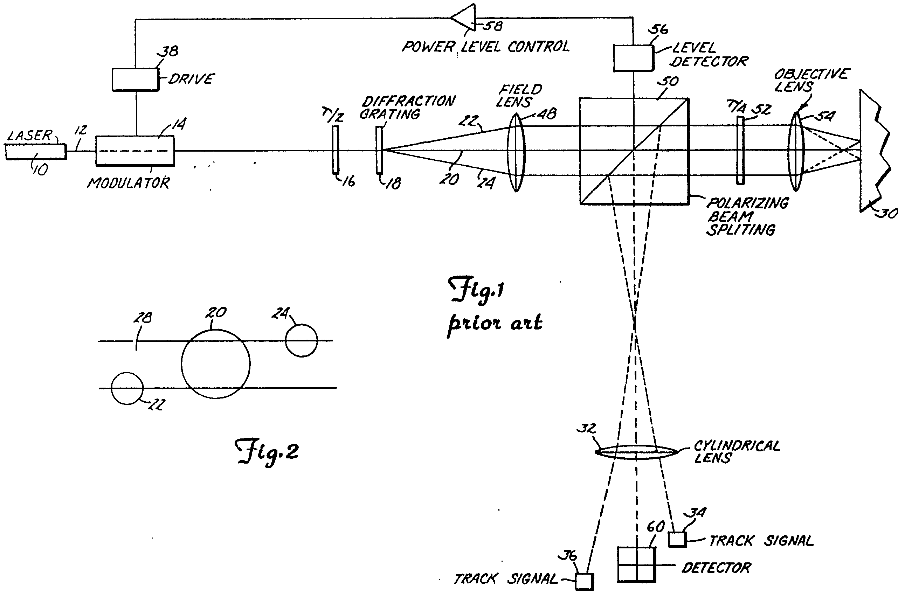

Figure 1 illustrates a known switching laser beam apparatus for optical recording comprising a gas laser 10 which projects a beam 12 through an acoustic optical modulator 14, a half-wave plate 16, and a diffraction grating 18, which splits the beam into three beams (best seen in Figure 2) comprised of a central read or write beam 20, a read-before-write beam 22 and a read-after-write beam 24. The read or write beam 20 is intended to be centered on a recessed track 28 (Figure 2), on an optical recording surface 30 while the read-before-write beam 22 follows the left-hand edge of the track 28 and the read-after write beam 24 follows the right edge of the track 28. The three beams 20, 22, 24, after having been diffracted, pass through a field lens 48, a polarizing beam splitter 50, a quarter-wave plate 52 and an objective lens 54 which focuses the beams onto the optical recording surface 30. The beams are reflected by the optical recording surface 30, and pass back through the objective lens 54 and the quarter-wave plate 52, to be reflected by the polarizing beam splitter 50 towards a cylindrical lens 32 which focuses the read-before-write beam 22 and the read-after-write beam 24 onto track signal detectors 34, 36 respectively, and the read or write beam 20 onto a quad field detector 60. A portion of the read or write beam 20 is reflected by the polarizing beam splitter 50 into a level detector 56 which provides a feedback through a power level control circuit 58 to a drive circuit 38 which, in turn, controls the power applied to the acoustic optical modulator 14.

Conventionally, the power of the write beam is an order of magnitude greater than the power of the read beam. Typically, therefore, the laser 10 is operated at one power level for read operations and a second power level for write operations. This, likewise, causes the read-before-write beam 22 and the read-after-write beam 24, derived as they are from the read or write beam 20, to vary in the same ratio of power.

The track signal detectors 34, 36 operate by discriminating between small changes in reflected intensity as the corresponding beams on the track 28 cross a track boundary as shown in Figure 2. The variations in signal power detected by the track signal detectors 34, 36 are, in turn, fed into a servo system (not shown) which maintains the optical system focused on the centre of the track 28.

One can readily see the engineering problem posed by having the read-before-write beam 22 and the read-after-write beam 24 respectively operating at two magnitudes of power an order of magnitude apart, where the track signal detectors 34, 36 are attempting to distinguish between small changes in power. The present invention seeks to overcome this problem.

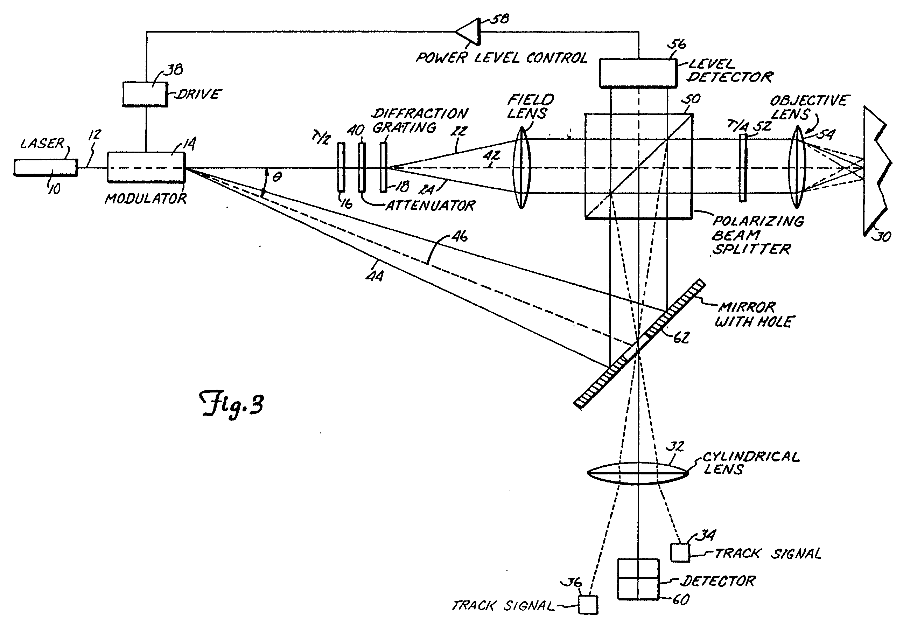

Figure 3 shows a first embodiment of a switching laser beam apparatus according to the present invention for optical recording. Like parts in Figures 1 and 3 have been designated by the same reference numerals.

In the switching laser beam apparatus of Figure 3 a write beam 44 is centred on an optical path 46. A mirror 62, having a central aperture, is mounted in the optical path 46 and an attenuator 40 is mounted between the half-wave plate 16 and the diffraction grating 18. The mirror 62 is mounted to intersect the write beam 44 and reflect it into the polarizing beam splitter 50 such that it is then reflected by the polarizing beam splitter through the quarter-wave plate 52 and the objective lens 54 onto the optical recording surface 30 at approximately the same location as that of a read beam 42 produced from the laser beam by the diffraction grating 18. Thus the write beam is returned to the optical path of the read beam after the diffraction grating 18.

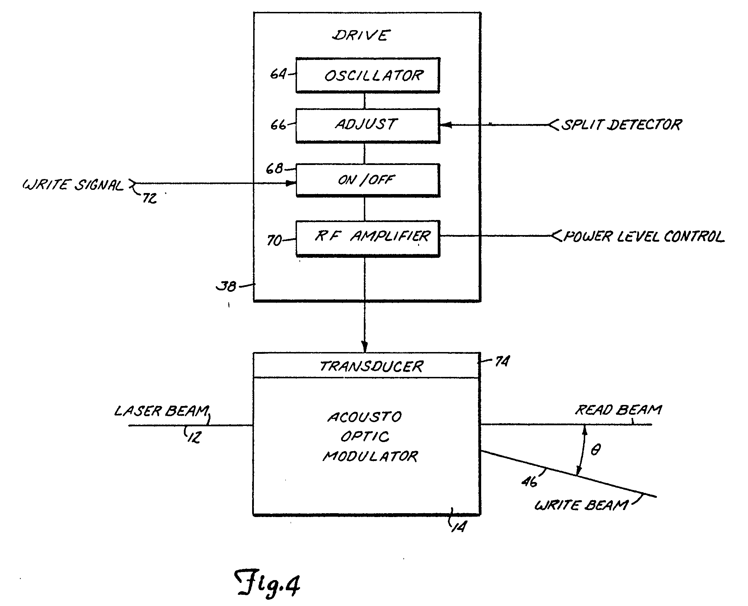

Referring to Figure 4, the drive circuit 38 includes a fixed frequency oscillator 64 whose output is adjusted by a fine frequency adjust circuit 66 responsive to a control signal from the quad field detector 60. An adjusted oscillator signal from the adjust circuit 66 is fed to an on/off control circuit 68 which permits the adjusted oscillator signal to pass selectively to an RF amplifier 70. The on/off control circuit 68 is responsive to a write signal 72. Essentially when information, such as a "hole" is desired to be written on the optical recording surface 30, the write signal 72 causes the on/off control circuit 68 to pass the adjusted oscillator signal through to the RF amplifier 70. In contrast when no information is desired to be written on the optical recording surface 30, the write signal causes the on/off control circuit 68 to block the adjusted oscillator signal. As a result, the RF amplifier outputs no signal to a transducer 74 of the acoustic optical modulators 14. With no signal at the transducer 74, the acoustic optical modulator passes the entire beam 12 through the acoustic optical modulator 14 to the diffraction grating 18 at near maximum intensity. When the on/off control circuit 68 passes the adjusted oscillator signal onto the RF amplifier 70, the amplified signal from the RF amplifier causes the transducer 74 to induce sonic waves in the acoustic optical modulator 14. The interference between the acoustic waves and the beam 12 passing through the acoustic optical modulator causes a portion of the laser beam to be deflected at an angle θ by so-called Bragg diffraction. The Bragg angle θ is given by:

$$\sin \theta = \lambda / 2\, n\, T,$$

where λ is the wave length of light in the media, n is the refractive index of the media and T is the wave length of the acoustic waves, i.e. $T = v_a / f_a$ where $v_a$ is the velocity of the acoustic waves and $f_a$ is the frequency of the acoustic waves.

Again referring to Figure 3, when the acoustic optical modulator 14 deflects the write beam 44 along the optical path 46, the write beam impinges on the mirror 62 which reflects it into the polarizing beam splitter 50, which, in turn, reflects the write beam through the quarter-wave plate 52, the objective lens 54 and on to the optical recording surface 30. Until the write beam burns a "hole" in the optical recording surface 30 it reflects back through the objective lens 54, the quarter-wave plate 52, the polarizing beam splitter 50, the central aperture in the mirror 62 and through the cylindrical lens 32 where it impinges on the quad field detector 60. A split field detector may be used in place of the quad field detector. The quad field detector detects the percentage of the beam lying in four respective quadrants and provides the control signal to the adjust circuit 66 thereby to adjust the Bragg angle θ of the write beam. It also provides a signal to a servo system (not shown) to compensate for offset of the focusing of the objective lens 54. If a split field detector is used, only adjustment of the Bragg angle θ is possible.

Again referring to Figure 3 when the beam 12 is undeflected, it passes through the half-wave plate 16 and encounters the attenuator 40. The attenuator cuts the power of the beam 12 by an order of magnitude. In the preferred embodiment, the power of the beam is cut to approximately 5% of the original power of the beam. Thereafter, the attenuated beam passed through the diffraction grating 18 where it is split into the read beam 42, the read-before-write beam 22 and the read-after-write beam 24, which, after passing through the polarizing beam splitter 50, the quarter-wave plate 52, and the objective lens 54, impinge upon the optical recording surface 30 as shown in Figure 2. Thereafter, the beams 22, 24, 42 are reflected back through the objective lens and the quarter-wave plate where they are reflected by the polarizing beam splitter downwards. The dotted lines in Figure 3 represent the paths taken by the read-before-write beam and the read-after-write beam. The beams 22, 24, 42 pass through the central aperture of the mirror 62, through the cylindrical lens 32 and impinge upon the respective track detectors 34, 36 and the quad field detector 60. The impingement of the read-before-write beam and the read-after-write beam on the track signal detectors 34, 36 respectively serve the same servo function as in the known apparatus of Figure 1 but the power level impinging upon these detectors has a maximum predetermined level determined by the maximum power of the beam 12 as attenuated by the attenuator 40. The quad field detector 60, detecting the reflected read signal, provides feedback to the servo system to adjust for accurate focusing of the objective lens 54.

Again referring to the write beam 44, when it enters the polarizing beam splitter 50 a percentage of the beam is transmitted directly through the polarizing beam splitter 50 and impinges upon the level detector 56. The level detector 56 then provides a feedback signal to the power level control circuit 58 which, in turn, provides a power level control signal to the RF amplifier 70 in the drive circuit 38. Likewise, a certain percentage of the read beam 42 is reflected to the level detector 56 by the polarizing beam splitter 50 and the power of the read beam is also dynamically adjusted by the power level control circuit 58 providing the power level control signal to the RF amplifier 70 in the drive circuit 38.

The implication of the above is as if the beam 12 were being entirely deflected into the optical path of the write beam 46 such that there remained no residual power along the optical path of the read beam 42. In practice, the percentage of the beam deflected along the optical path 44 which is a first order diffraction path depends upon the amount of power induced into the acoustic optical modulator 14 by the transducer 74. The intensity of light in the first order diffraction path is:

$$I = I_o \sin^2 (\Delta\phi/2)$$

where $I_o$ is the incident intensity and

$$\Delta\phi = 2 \pi I \Delta n/\lambda,$$

where $I$ is the interaction length, $\lambda$ is the wavelength of the laser light and

$$\Delta n = (M_2 \, 10^7 \, P/2 \, A)^{1/2},$$

where

$$M_2 = n^6 \, p^2/\rho \, v_a^3$$

is a figure of merit for the material, p being the component of the photoelastic tensor, $\rho$ the density in $\overline{g}/cc$, $v_a$ the acoustic velocity in cm/s, $n$ the refractive index of the acoustic medium, P is the acoustic power in watts, and A the cross-sectional area of the acoustic beam in $cm^2$. It can be seen from the above equations that the percentage of beam deflected into the first order diffraction path is dependent upon the power of the transducer 74. Thus when it is said that the beam 12 is deflected along the optical path 44 of the write beam 46, what is meant is that a certain percentage of the beam 12 is deflected along this optical path whilst the remainder continues along the optical path of the read beam 42. It will be appreciated that by controlling the attenuator 40 it is possible to select the appropriate percentage of the power of the beam 12 to be deflected along the optical path 46 so as to minimise or maximise the amount of power used either by the transducer 74 or the amount of power absorbed by the attenuator 40.

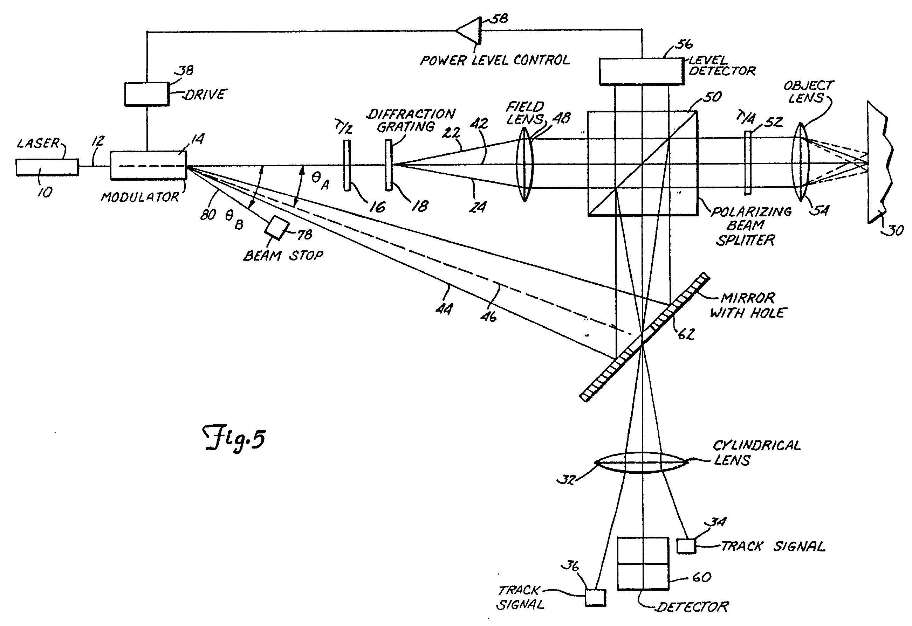

Figure 5 shows a second embodiment of a switching laser beam apparatus according to the present invention. In this embodiment, the attenuator 40 of Figure 3 has been eliminated so that the read beam 42 is permitted to pass onto the optical recording surface 30 at undiminished power. In this embodiment the write beam 44 is constantly "on", but when it is desired not to write, the write beam is deflected into a beam stop 78. The write beam is selectively directed along two optical paths: the optical path 46 where it is directed into the mirror 62 and used to write data onto the optical recording surface 30, and an optical path 80 where it is directed into the beam stop 78 when it is not desired to write data onto the optical recording surface 30. Data comprising a series of burns or not burned areas or "holes" of the optical recording surface 30 can be written using this switching laser beam apparatus by high frequency switching of the write beam between the optical paths 46, 80. The other parts shown in Figure 5 are the same as those shown in Figure 3 and will not be described further.

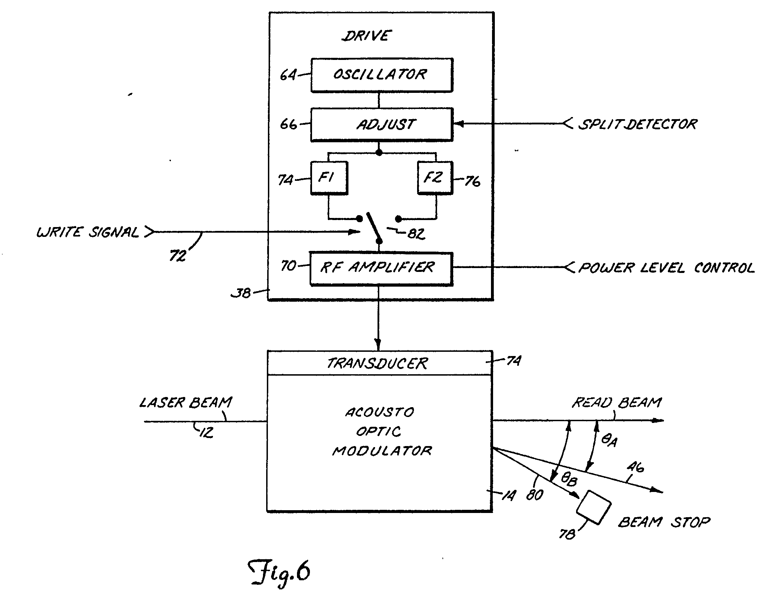

Figure 6 shows the drive circuit 38 of the switching laser beam apparatus of Figure 5 necessary to achieve the deflection of the write beam along the optical paths 46, 80. Like parts in Figures 4 and 6 have been designated by the same reference numerals. The on/off control circuit 68, shown in Figure 4, has been replaced by frequency control circuits 74, 76 and a switch 82 for switching the outputs of the frequency control circuits 74, 76 into the RF amplifier 70. The switch 82 is responsive to the write signal 72. The output of the frequency control circuit 74 causes the acoustic optical modulator 14 to deflect a percentage of the beam 12 by an angle $\theta_A$ along the optical path 46. The output of the frequency control circuit 76 causes the acoustic optical modulator 14 to deflect a percentage of the beam 12 at an angle $\theta_B$ along the optical path 80. The actual difference between angles $\theta_A$ and $\theta_B$ need not be very large and in practice should be made small so that the deflection can be made rapidly. Therefore the frequency difference between the outputs of the frequency control circuits 74, 76 are similarly small. It will be appreciated that the frequency of the frequency control circuit 76 is a higher frequency than the frequency of the frequency control circuit 74.

In this embodiment the power at which the transducer 74 is operated is sufficient to divert approximately 95% of the power of the beam 12 into either the optical path 46 or the optical path 80. The remaining 5% of the power continues along the optical path of the read beam 42. As a result, the track signal detectors 34, 36 detect the read-before-write beam and the read-after-write beam at a constant power, far less than the power were the right beam transmitted along the optical path of the read beam 42 undiminished in power.

## Claims

1. A switching laser beam apparatus for optical recording comprising: a laser (10) for projecting a laser beam (12) in a first path; splitter means (18) for generating a read-before-write beam (22), a read beam (42) and a read-after-write beam (24) from the laser beam (12); and an acoustic optical modulator (14) between the laser (10) and the splitter means (18) in the path of the laser beam (12), characterised by generating means (38) for generating a signal for causing the acoustic optical modulator (14) to produce a write beam (44) by diffracting a predetermined percentage of the laser beam into a second path (46); and diverting means (50, 62) for diverting the write beam (44) into the first path after the splitter means (18).

2. An apparatus as claimed in claim 1 characterised by including detector means (60) for detecting the write beam (42) after reflection from an optical recording surface (30), the generating means (38) including adjust means (66) for altering the frequency of said signal in response to the detector means.

3. An apparatus as claimed in claim 2 characterised in that the detector means (60) is a split field detector or a quad field detector.

4. An apparatus as claimed in claim 3 characterised in that the quad field detector (60) includes means for detecting the path of the reflected write beam in two dimensions to permit control in the two dimensions.

5. An apparatus as claimed in any preceding claim characterised by including attenuator means (40) disposed between the acoustic optical modulator (14) and the splitter means (18) in the first path.

6. An apparatus as claimed in any preceding claim characterised in that the generating means (38) includes switch means (68) responsive to a write signal (72) for selectively passing said signal to the acoustic optical modulator (14) for selectively producing the write beam (44).

7. An apparatus as claimed in any of claims 1 to 4 characterised by including a beam stop (78) mounted at a position out of the second path (46), the generating means (38) including means (76) for generating a further signal having a frequency different from that of the first-mentioned signal for causing the write beam (46) to be diffracted to said beam stop (78), and means (82) responsive to a write signal for selectively applying the first-mentioned and further signals to the acoustic optical modulator (14).

**Patentansprüche**

1. Schaltgerät für einen Laserstrahl zum optischen Aufzeichnen, mit einem Laser (10) zur Projektion eines Laserstrahls (12) auf eine ersten Bahn, mit Strahlteilereinrichtungen (18) zur Erzeugung eines Lesen-Vor-Schreiben-Strahls (22), eines Lesestrahls (42) und eines Lesen-Nach-Schreiben-Strahls (24) aus dem Laserstrahl (12), und mit einem akusto-optischen Modulator (14) zwischen dem Laser (10) und den Strahlteilereinrichtungen (18) in der Bahn des Laserstrahls (12), gekennzeichnet durch eine Generatoreinrichtung (38) zur Erzeugung eines Signals zur Ansteuerung des akusto-optischen Modulator (14) derart, daß er einen Schreibstrahl (44) durch Beugen eines vorgegebenen prozentualen Anteils des Laserstrahls auf eine zweite Bahn (46) erzeugt, und Ablenkeinrichtungen (50, 62) zum Ablenken des Schreibstrahls (44) auf die erste Bahn nach den Strahlteilereinrichtungen (18).

2. Gerät nach Anspruch 1, gekennzeichnet durch den Einschluß einer Detektoreinrichtung (60) zur Erfassung des Schreibstrahls (42) nach der Reflektion von einer optischen Aufzeichnungsoberfläche (30), wobei die Generatoreinrichtung (38) Einstelleinrichtungen (66) zur Änderung der Frequenz des Signals in Abhängigkeit von der Detektoreinrichtungen einschließt.

3. Gerät nach Anspruch 2, dadurch gekennzeichnet, daß die Detektoreinrichtung (60) ein Spaltfelddetektor oder ein Vierfachfelddetektor ist.

4. Gerät nach Anspruch 3, dadurch gekennzeichnet, daß der Vierfachfelddetektor (60) Einrichtungen zur Erfassung der Bahn des reflektierten Schreibstrahls in zwei Dimensionen einschließt, um eine Steuerung in den beiden Dimensionen zu ermöglichen.

5. Gerät nach einem der vorhergehenden Ansprüche, gekennzeichnet durch den Einschluß von Dämpfungseinrichtungen (40), die zwischen dem akusto-optischen Modulator (14) und den Strahlteilereinrichtungen (18) auf der ersten Bahn angeordnet sind.

6. Gerät nach einem der vorhergehenden Ansprüche, dadurch gekennzeichnet, daß die Generatoreinrichtung (38) eine Schaltereinrichtung (68) einschließt, die auf ein Schreibsignal (72) anspricht, um selektiv das Signal an den akusto-optischen Modulator (14) zu leiten, um selektiv den Schreibstrahl (44) zu erzeugen.

7. Gerät nach einem der Ansprüche 1 bis 4, gekennzeichnet durch den Einschluß einer Strahlstoppeinrichtung (78), die an einer Position außerhalb der zweiten Bahn (46) angeordnet ist wobei die Generatoreinrichtung (38) Einrichtungen (76) zur Erzeugung eines weiteren Signals mit einer von der des erstgenannten Signals abweichenden Frequenz zur Erzielung einer Beugung des Schreibstrahls (36) in Richtung auf die Strahlstoppeinrichtung (78) und Einrichtungen (82) einschließt, die auf ein Schreibsignal ansprechen um selektiv das erstgenannte und die weiteren Signale an den akusto-optischen Modulator (14) anzulegen.

**Revendications**

1. Appareil à faisceau laser commuté destiné à l'enregistrement optique, comprenant un laser (10) destiné à projeter un faisceau laser (12) suivant un premier trajet, un répartiteur (18) destiné à créer un faisceau de lecture avant écriture (22), un faisceau de lecture (42) et un faisceau de lecture après écriture (24) à partir du faisceau laser (12), et un modulateur acousto-optique (14) placé entre le laser (10) et le répartiteur (18) sur le trajet du faisceau laser (12), caractérisé par un dispositif générateur (38) destiné à créer un signal destiné à provoquer la production, par le modulateur acousto-optique (14), d'un faisceau d'écriture (44) par diffraction d'un pourcentage prédéterminé du faisceau laser un second trajet (46), et un dispositif (50, 62) de déviation du faisceau d'écriture (44) sur le premier trajet après le répartituer (18).

2. Appareil selon la revendication 1, caractérisé en ce qu'il comprend un dispositif (60) de détection du faisceau d'écriture (42) après sa réflexion par une surface d'enregistrement optique (30), le dispositif (38) générateur comprenant un dispositif de réglage (66) destiné à modifier la fréquence du signal en fonction du dispositif détecteur.

3. Appareil selon la revendication 2, caractérisé en ce que le dispositif détecteur (60) est un détecteur divisé de champ ou un détecteur quadruple de champ.

4. Appareil selon la revendication 3, caractérisé en ce que le détecteur quadruple de champ (60) comporte un dispositif de détection du trajet du faisceau réfléchi d'écriture dans deux directions afin que le réglage puisse être réalisé dans ces deux directions.

5. Appareil selon l'une quelconque des revendications précédentes, caractérisé en ce qu'il comprend un atténuateur (40) placé entre le modulateur acousto-optique (14) et le répartitueur (18) sur le premier trajet.

6. Appareil selon l'une quelconque des revendications précédentes, caractérisé en ce que le dispositif générateur (38) comporte un dispositif de commutation (68) commandé par un signal d'écriture (72) et destiné à transmettre sélectivement le signal au modulateur acousto-optique (14) afin qu'il produise sélectivement le faisceau d'écriture (44).

7. Appareil selon, l'une quelconque des revendications 1 à 4, caractérisé en ce qu'il comprend un diaphragme (78) monté en dehors du second trajet (46), le dispositif générateur (38) comprenant un dispositif (76) destiné à créer un signal supplémentaire ayant une fréquence différente de celle du premier signal cité et destiné à provoquer la diffraction du faisceau d'écriture (46) vers le diaphragme (78), et un dispositif (82) commandé par un signal d'écriture et destiné à appliquer sélectivement les premiers signaux cités et les signaux supplémentaires au modulateur acousto-optique (14).

**Fig.1**
**prior art**

**Fig.2**

Fig.3

2

Fig.4

Fig.5

LASER 10
12
MODULATOR 14
38 DRIVE
80 θB
θA
78 BEAM STOP
16 T/2
18 DIFFRACTION GRATING
22 42
24
FIELD LENS 48
POWER LEVEL CONTROL 58
56 LEVEL DETECTOR
50
POLARIZING BEAM SPLITTER
T/A 52
OBJECT LENS
54
30
MIRROR WITH HOLE 62
44 46
CYLINDRICAL LENS
32
34 TRACK SIGNAL
60
36 TRACK SIGNAL
DETECTOR

EP 0 147 006 B1

4

Fig.6